# EUROPEAN PATENT APPLICATION

(11) **EP 0 549 135 A1**
(43) Date of publication of application: **30.06.1993**
(21) Application number: 92310713.0
(22) Date of filing: 24.11.1992
(51) Int. Cl.: C04B 7/52

(54) **Method for finish-grinding cement in a roller mill plant**

(30) Priority: 23.12.1991 DK 2056/91
(71) Applicant: F.L. Smidth & Co. A/S, DK-2500 Valby, Copenhagen (DK)
(72) Inventor: Osbaeck, Bjarne Hilmer, DK-2500 Valby, Copenhagen (DK)
(74) Representative: Jackson, Peter Arthur

(57) **Abstract**

To reduce the need for water addition to cement products containing cement manufactured in roller mill plants, a method is described for finish-grinding of the cement, whereby a certain prehydration of the cement is ensured in order to compensate for the reduced retardation efficiency deriving from a gypsum component of cement manufactured by roller mill plants.

## Description

The present invention relates to a method for fihish-grinding cement in a roller mill plant.

Cement, e.g. Portland cement, is manufactured according to a method by which cement clinker is ground together with gypsum and possibly other additives to a fine powder. The function of the gypsum is to extend the setting time of the finished cement.

Hitherto it has been common practice to use tube mills or ball mills for finish-grinding of cement, and in such mills a considerable amount of the grinding energy is transformed into heat. Such grinding heat will together with the heat in the clinker introduced into the tube mill cause the grinding material in the tube mill to be heated to a relatively high temperature; however, this is not desirable since it may increase the tendency of the cement powder to adhere to the grinding media, entailing a reduction in the grinding efficiency in the mill. This heating may also involve that the crystal water in the added gypsum (CaSO₄2H₂O) is expelled completely, entailing also abnormal setting behaviour of the finished cement.

In order to reduce the temperature in the tube mill as a means of remedying the above-mentioned drawbacks, it is general practice to inject water into the tube mill. However, this may cause the clinker minerals of the cement to react with the added moisture so that their reactivity is reduced, i.e. the setting time for the finished cement is prolonged and particularly the early strengths will be reduced.

Consequently, for water cooling of tube mills, the water injection is normally controlled in such manner that the reaction between the clinker minerals of the cement and the added water, also referred to as prehydration, is minimized.

In recent years the general trend has been towards utilization of roller mills instead of tube mills for finish-grinding cement, e.g. vertical mills in which the grinding rollers roll against a grinding table, or roller presses in which two rollers roll against one another.

Examples of the two types of roller mills are known i.a. from EP patent application No. 112022 and DE patent specification No. 1757093.

In a roller mill of above-mentioned kind, the clinker/gypsum mixture is subjected only to a transitory pressure between the grinding means, and the retention time in the roller mill per se is relatively short. Hence the cement is not exposed to the same degree of intense heating as encountered in a tube mill plant, and as a result of the relatively low temperature and the short retention time the gypsum will not be dehydrated, i.e. it will not lose its crystal water. Furthermore, because of the normally efficient separation stage which is often incorporated in these types of grinding plants, the gypsum will probably not attain the same fineness and homogenous distribution in the final cement as is obtainable when grinding e.g. in a tube mill.

Because of the aforementioned factors, the intended ability of the gypsum to prolong the setting time of the cement during grouting is reduced by inhibiting the reaction between the added water and the C₃A-phase of the clinker. Since the C₃A-phase of the clinker is further considered to achieve greater reactivity when grinding is performed in roller mill plants due to the microcracks imparted to the material as a result of compressive stresses, this will also contribute unfavourably towards reducing the setting time of the grouted cement.

Another problem in connection with the manufacture of cement by grinding in a roller mill plant is that the inadequate retardation of the C₃A-phase will necessitate a much greater water addition rate in order to achieve the desired consistency or fluidity of a stirred cement paste, mortar or concrete, but an increase in the water addition rate will have a detrimental effect on the characteristics of the hardened cement product, resulting in impaired strength and durability when the water content is increased beyond the normal level for the cement product mixture.

It is therefore the object of the present invention to provide a method for manufacturing cement according to which the aforementioned problems are eliminated.

According to the invention, this object is achieved by a method of the kind described in the introduction, and being characterized in that water is added to the material which is to be ground in the roller mill.

This involves that a certain prehydration of the cement will take place during the actual grinding process, due to the fact that the added water will react with the cement, particularly the C₃A-phase of the cement, whereby the reactivity of the latter will be reduced, hence compensating for the reduced efficiency of retardation of the gypsum component. Hence a cement is obtained, where the need for addition of water when stirring the cement into cement paste, mortar or concrete is substantially reduced, thus improving the characteristics, such as strengh and durability, of the hardened cement product.

To obtain the optimum mixture of the water in the cement material it is preferred that the water is added to the material prior to its introduction into the roller mill, possibly by addition of aqueous cement components.

In the majority of grinding plants comprising a roller mill it is common practice to subject the material to repeated grinding, and, consequently, it may, in certain instances, be advantageous to add water to the material by means of water injection at a number of locations in the roller mill.

According to the prevention it is further preferred that the water addition to the material is controlled as a function of either a number of product parameters or a number of process parameters for the plant.

## Claims

1. A method for finish-grinding cement in a roller mill plant, **characterized in**, that water is added to the material which is to be ground in the roller mill.

2. A method according to claim 1, **characterized in**, that water is added to the material prior to its introduction into the roller mill.

3. A method according to claim 1 or 2, **characterized in**, that water is added to the material by feeding aqueous cement components to the roller mill.

4. A method according to claim 1, **characterized in**, that water is added to the material by means of water injection at a number of locations in the roller mill.

5. A method according to claim 1-4, **characterized in**, that the water addition to the material is controlled as a function of a number of product parameters.

6. A method according to claim 1-4, **characterized in**, that the water addition to the material is controlled as a function of a number of process parameters for the plant.
